# EUROPEAN PATENT APPLICATION

(11) **EP 4 475 606 A1**
(43) Date of publication of application: **11.12.2024**
(21) Application number: 23773886.9
(22) Date of filing: 22.03.2023
(51) Int. Cl.: H04W 56/00, H04L 5/00

(54) **ULTRA-WIDEBAND SIGNAL SYNCHRONIZATION METHOD AND COMMUNICATION APPARATUS**

(30) Priority: 25.03.2022 CN 202210300261; 30.06.2022 CN 202210761590
(71) Applicant: Huawei Technologies Co., Ltd., Shenzhen, Guangdong 518129 (CN)
(72) Inventor: WANG, Wei, Shenzhen, Guangdong 518129 (CN); YU, Qian, Shenzhen, Guangdong 518129 (CN); WANG, Kang, Shenzhen, Guangdong 518129 (CN); LIANG, Fangli, Shenzhen, Guangdong 518129 (CN)
(74) Representative: Maiwald GmbH
(86) International application number: PCT/CN2023/082960
(87) International publication number: WO 2023/179639

(57) **Abstract**

This application provides an ultra-wideband signal synchronization method and a communication apparatus, which can be used in an ultra-wideband UWB signal synchronization scenario and a ranging scenario with high positioning precision. In the method, a transmit device transmits a narrowband signal and a UWB signal to a receive device. The UWB signal includes a synchronization signal and a ranging signal located after the synchronization signal. The receive device receives and processes the narrowband signal, to obtain rough time-frequency synchronization information (that is, time-frequency synchronization information of the narrowband signal), and receives the synchronization signal of the UWB signal based on the rough time-frequency synchronization information. The receive device processes the synchronization signal, to obtain more precise time-frequency synchronization information (that is, time-frequency synchronization information of the UWB signal). In the method, the time-frequency synchronization information of the narrowband signal is used to assist time-frequency synchronization of the UWB signal, to reduce complexity of synchronization of the UWB signal by the receive device without affecting UWB ranging performance, so as to reduce implementation costs, power consumption, an area, and the like of a UWB signal processing chip of the receive device.

## Description

This application claims priorities to Chinese Patent Application No. 202210300261.X, filed with the China National Intellectual Property Administration on March 25, 2022 and entitled "NARROWBAND-ASSISTED TIME-FREQUENCY SYNCHRONIZATION METHOD FOR ULTRA-WIDEBAND SIGNAL", and to Chinese Patent Application No. 202210761590.4, filed with the China National Intellectual Property Administration on June 30, 2022 and entitled "ULTRA-WIDEBAND SIGNAL SYNCHRONIZATION METHOD AND COMMUNICATION APPARATUS", both of which are incorporated herein by reference in their entireties.

### TECHNICAL FIELD

Embodiments of this application relate to the field of ultra-wideband technologies, and more specifically, to an ultra-wideband signal synchronization method and a communication apparatus.

### BACKGROUND

Currently, an ultra-wideband (Ultra-Wideband, UWB) wireless technology is widely used. Because an ultra-wideband signal is a narrow (at a nanosecond level) pulse signal with extremely low radiation spectrum density, the signal has a good multipath parsing capability to ensure centimeter-level ranging precision in a complex indoor multipath environment. However, one disadvantage of the ultra-wideband wireless technology is that the ultra-wideband wireless technology requires a high signal sampling rate (GHz) to implement signal receiving and processing, in other words, a clock of an ultra-wideband signal processing chip needs to operate at a high frequency. Consequently, the ultra-wideband signal processing chip needs to have a large area, and power consumption and costs of the ultra-wideband signal processing chip are high.

A narrowband-assisted ultra-wideband ranging method is proposed, to reduce the area, the power consumption, and the costs of the ultra-wideband signal processing chip. In the ranging method, a positioning device transmits a narrowband signal, so that a mobile tag obtains time-frequency synchronization of the signal. On this basis, the mobile tag receives a ranging signal for ranging. Although a time-frequency synchronization mechanism of the narrowband signal can be simply implemented, time-frequency synchronization precision of the signal is not high due to limitations of a bandwidth and a clock frequency of the narrowband signal. However, ultra-wideband ranging precision has a high requirement for time-frequency synchronization precision. If time-frequency synchronization information with low precision is used, ranging performance is severely affected.

On a premise that ranging performance of the ultra-wideband signal is not affected, reducing complexity of the time-frequency synchronization of the UWB signal is a key factor to reduce the area, the power consumption, and the costs of the ultra-wideband chip.

### SUMMARY

Embodiments of this application provide an ultra-wideband signal synchronization method and a communication apparatus, to reduce complexity of time-frequency synchronization of a UWB signal without affecting ultra-wideband ranging performance, so as to reduce an area, power consumption, and costs of an ultra-wideband signal processing chip of a UWB signal receive device.

According to a first aspect, a signal synchronization method is provided. The method includes:

A receive device processes a narrowband signal, to obtain time-frequency synchronization information of the narrowband signal.

The receive device processes a synchronization signal of an ultra-wideband UWB signal based on the time-frequency synchronization information of the narrowband signal, to obtain time-frequency synchronization information of the UWB signal. The UWB signal includes the synchronization signal and a ranging signal.

The receive device receives the ranging signal based on the time-frequency synchronization information of the UWB signal.

In the technical solutions, a transmit device transmits the narrowband signal and the UWB signal to the receive device. The UWB signal includes the synchronization signal and the ranging signal located after the synchronization signal. The receive device receives and processes the narrowband signal, to obtain rough time-frequency synchronization information (or the time-frequency synchronization information of the narrowband signal), and receives the synchronization signal of the UWB signal based on the rough time-frequency synchronization information. The receive device processes the synchronization signal, to obtain more precise time-frequency synchronization information (or the time-frequency synchronization information of the UWB signal). Based on the technical solutions, the time-frequency synchronization information of the narrowband signal is used to assist time-frequency synchronization of the UWB signal, to reduce complexity of synchronization of the UWB signal by the receive device without affecting UWB ranging performance, so as to reduce implementation costs, power consumption, an area, and the like of a UWB signal processing chip of the receive device.

It should be understood that, in this application, the "narrowband signal" is relative to the "ultra-wideband signal". A bandwidth of the ultra-wideband signal is usually at least 500 MHz, and a signal whose bandwidth is less than the bandwidth of the ultra-wideband signal is a narrowband signal.

Optionally, the narrowband signal includes but is not limited to a signal provided by the following wireless technologies: the Bluetooth (Bluetooth, BT) technology, the Zigbee (Zigbee) technology, the 802.15.4-based technology (for example, the Thread technology), the Wi-Fi technology (including various 802.11 standards), the narrowband Internet of things (narrowband Internet of things, NB-IoT), long term evolution-machine to machine (long term evolution-machine to machine, LTE-M), LoRa, Sigfox, and another wireless technology in a cellular system, another wireless technology that can provide a narrowband signal in the future, and the like. This is not limited.

With reference to the first aspect, in some implementations of the first aspect, that the receive device processes a synchronization signal of a UWB signal based on the time-frequency synchronization information of the narrowband signal, to obtain time-frequency synchronization information of the UWB signal includes:

The receive device receives the synchronization signal of the UWB signal based on the time-frequency synchronization information of the narrowband signal. There is a set time interval between the narrowband signal and the synchronization signal of the UWB signal in time domain.

The receive device detects the synchronization signal of the UWB signal, to obtain the time-frequency synchronization information of the UWB signal.

In this implementation, the narrowband signal and the synchronization signal of the UWB signal are the set time interval in time domain. Therefore, after receiving the narrowband signal, the receive device may receive the UWB signal after the set time interval, to reduce complexity of receiving the UWB signal by the receive device.

With reference to the first aspect, in some implementations of the first aspect, that the receive device detects the synchronization signal of the UWB signal, to obtain the time-frequency synchronization information of the UWB signal includes:

The receive device detects the synchronization signal of the UWB signal, and determines a main propagation path of the synchronization signal between the transmit device and the receive device, to obtain time domain synchronization information of the UWB signal.

The receive device performs frequency offset estimation based on the main propagation path, to obtain frequency domain synchronization information of the UWB signal.

In this implementation, the receive device obtains a precise time domain synchronization signal of the UWB signal under assistance of the narrowband signal, and then performs frequency offset estimation based on the precise time domain synchronization information, to obtain more precise frequency domain synchronization information of the UWB signal. This improves precision of the time-frequency synchronization information of the UWB signal.

With reference to the first aspect, in some implementations of the first aspect, the method further includes:

The receive device performs channel impulse response CIR estimation based on the ranging signal, to obtain an estimation result.

The receive device determines a first propagation path of the ranging signal between the transmit device and the receive device based on the estimation result.

The receive device performs ranging calculation based on the first propagation path.

In this implementation, the receive device obtains precise time-frequency synchronization information of the UWB signal under assistance of the narrowband signal, receives the UWB signal based on the precise time-frequency synchronization information, and performs ranging calculation based on the ranging signal of the UWB signal. This can improve ranging precision.

According to a second aspect, a signal synchronization method is provided. The method includes:

A transmit device transmits a narrowband signal. The narrowband signal is used by a receive device to obtain time-frequency synchronization information of the narrowband signal.

The transmit device transmits a UWB signal. The UWB signal includes a synchronization signal and a ranging signal, and the synchronization signal and the time-frequency synchronization information of the narrowband signal are used by the receive device to obtain time-frequency synchronization information of the UWB signal.

With reference to the second aspect, in some implementations of the second aspect, there is a set time interval between the narrowband signal and the synchronization signal of the UWB signal in time domain.

For beneficial technical effect of the method in the second aspect or a specific implementation of the method in the second aspect, refer to descriptions about technical effect of the related solutions in the first aspect. Details are not described again.

According to a third aspect, a communication apparatus is provided. The communication apparatus has functions of implementing the method in any one of the first aspect or the possible implementations of the first aspect. The function may be implemented by hardware, or may be implemented by hardware executing corresponding software. The hardware or the software includes one or more units corresponding to the foregoing functions.

According to a fourth aspect, a communication apparatus is provided. The communication apparatus has functions of implementing the method in any one of the second aspect or the possible implementations of the second aspect. The function may be implemented by hardware, or may be implemented by hardware executing corresponding software. The hardware or the software includes one or more units corresponding to the foregoing functions.

According to a fifth aspect, a communication apparatus is provided, and includes a processor and a memory. Optionally, the communication apparatus may further include a transceiver. The memory is configured to store a computer program. The processor is configured to invoke and run the computer program stored in the memory, and control the transceiver to receive and transmit a signal, so that the communication apparatus performs the method in any one of the first aspect or the possible implementations of the first aspect.

According to a sixth aspect, a communication apparatus is provided, and includes a processor and a memory. Optionally, the communication apparatus may further include a transceiver. The memory is configured to store a computer program. The processor is configured to invoke and run the computer program stored in the memory, and control the transceiver to receive and transmit a signal, so that the communication apparatus performs the method in any one of the second aspect or the possible implementations of the second aspect.

According to a seventh aspect, a communication apparatus is provided, and includes a processor and a communication interface. The communication interface is configured to receive data and/or information, and communicate the received data and/or information to the processor, the processor processes the data and/or the information, and the communication interface is further configured to output data and/or information obtained through processing by the processor, so that the method in any one of the first aspect or the possible implementations of the first aspect is performed.

According to an eighth aspect, a communication apparatus is provided, and includes a processor and a communication interface. The communication interface is configured to receive (or referred to as input) data and/or information, and communicate the received data and/or information to the processor, the processor processes the data and/or the information, and the communication interface is further configured to output data and/or information obtained through processing by the processor, so that the method in any one of the second aspect or the possible implementations of the second aspect is performed.

According to a ninth aspect, a communication apparatus is provided, and includes at least one processor. The at least one processor is coupled to at least one memory. The at least one processor is configured to execute a computer program or instructions stored in the at least one memory, so that the communication apparatus performs the method in any one of the first aspect or the possible implementations of the first aspect.

According to a tenth aspect, a communication apparatus is provided, and includes at least one processor. The at least one processor is coupled to at least one memory. The at least one processor is configured to execute a computer program or instructions stored in the at least one memory, so that the communication apparatus performs the method in any one of the second aspect or the possible implementations of the second aspect.

According to an eleventh aspect, a computer-readable storage medium is provided. The computer-readable storage medium stores computer instructions, and when the computer instructions are run on a computer, the method in any one of the first aspect or the possible implementations of the first aspect is performed.

According to a twelfth aspect, a computer-readable storage medium is provided. The computer-readable storage medium stores computer instructions, and when the computer instructions are run on a computer, the method in any one of the second aspect or the possible implementations of the second aspect is performed.

According to a thirteenth aspect, a computer program product is provided. The computer program product includes computer program code, and when the computer program code is run on a computer, the method in any one of the first aspect or the possible implementations of the first aspect is performed.

According to a fourteenth aspect, a computer program product is provided. The computer program product includes computer program code, and when the computer program code is run on a computer, the method in any one of the second aspect or the possible implementations of the second aspect is performed.

According to a fifteenth aspect, a wireless communication system is provided, and includes the communication apparatus in the third aspect and the communication apparatus in the fourth aspect.

### BRIEF DESCRIPTION OF DRAWINGS

FIG. 1 is a diagram of a structure of a PPDU, in a UWB system, defined by a standard;
FIG. 2 is a diagram of a UWB ranging procedure under assistance of a narrowband protocol;
FIG. 3 is a diagram of an architecture of a communication system to which an embodiment of this application is applicable;
FIG. 4 is a schematic flowchart of a UWB signal synchronization method according to this application;
FIG. 5 is a diagram of a UWB signal synchronization method according to this application;
FIG. 6 is another diagram of a UWB signal synchronization method according to this application;
FIG. 7 is a diagram of an internal structure of a transmit device/receive device;
FIG. 8 is a diagram of an operating procedure of a UWB signal processing module of a receive device;
FIG. 9 is a block diagram of a communication apparatus according to this application; and
FIG. 10 is a diagram of a structure of a communication apparatus according to this application.

### DESCRIPTION OF EMBODIMENTS

The following describes technical solutions of embodiments in this application with reference to accompanying drawings.

The technical solutions in this application may be applied to a wireless personal area network (wireless personal area network, WPAN). Currently, a standard used for the WPAN is the Institute of Electrical and Electronics Engineers (Institute of Electrical and Electronics Engineers, IEEE) 802.15 series. The WPAN can be used for communication between digital assistant devices in a small range, for example, telephones, computers, and auxiliary devices. Technologies that support the wireless personal area network include Bluetooth (Bluetooth), Zigbee (Zigbee), ultra wideband (ultra wideband, UWB), an infrared data association (infrared data association, IrDA) connection technology, home radio frequency (home radio frequency, Home RF), and the like. From a perspective of network composition, the WPAN is located at a bottom layer of an entire network architecture and is used for a wireless connection between devices in a small range, that is, a point-to-point short-distance connection. The WPAN may be considered as a short-distance wireless communication network. Based on different application scenarios, WPANs are further classified into a high rate (high rate, HR)-WPAN and a low rate (low rate, LR)-WPAN. The HR-WPAN may be used to support various high-rate multimedia applications, including high-quality sound image delivery, multi-megabyte music and image document transmission, and the like. The LR-WPAN may be used for common services in daily life.

In the WPAN, devices may be classified into a full-function device (full-function device, FFD) and a reduced-function device (reduced-function device, RFD) based on communication capabilities of the devices. FFDs can communicate with each other, and the FFD can communicate with the RFD. RFDs cannot directly communicate with each other, and can only communicate with the FFD, or forward data to the outside through one FFD. The FFD associated with the RFD is referred to as a coordinator (coordinator) of the RFD. The RFD device is mainly used for a simple control application, for example a light switch and a passive infrared sensor. A small amount of data is communicated, and a small quantity of communication resources and communication resources are occupied. Therefore, costs of the RFD are low. The coordinator may also be referred to as a personal area network (personal area network, PAN) coordinator, a central control node, or the like. The PAN coordinator is a main control node of an entire network, and each self-organizing network can have only one PAN coordinator with member identity management, link information management, and a packet forwarding function.

Optionally, a device (for example, a transmit device or a receive device) in embodiments of this application may be a device supporting the 802.15 series, for example, a device supporting a plurality of WPAN standards such as 802.15.4a, 802.15.4z, and a currently discussed or subsequent version.

In embodiments of this application, the device may be a communication server, a router, a switch, a bridge, a computer, a mobile phone, a home smart device, a vehicle-mounted communication device, or the like.

In embodiments of this application, the device includes a hardware layer, an operating system layer running above the hardware layer, and an application layer running above the operating system layer. The hardware layer includes hardware such as a central processing unit (central processing unit, CPU), a memory management unit (memory management unit, MMU), and a memory (also referred to as a main memory). The operating system may be any one or more types of computer operating systems that implement service processing via a process (process), for example, a Linux operating system, a Unix operating system, an Android operating system, an iOS operating system, or a Windows operating system. The application layer includes applications such as a browser, an address book, word processing software, and instant messaging software. In addition, a specific structure of an execution body of the method provided in embodiments of this application is not specially limited in embodiments of this application, provided that a program that records code of the method provided in embodiments of this application can be run to perform communication according to the method provided in embodiments of this application. For example, the method provided in embodiments of this application may be performed by the FFD or the RFD, or a functional module that can invoke and execute the program in the FFD or the RFD.

In addition, aspects or features of this application may be implemented as a method, an apparatus, or a product that uses standard programming and/or engineering technologies. The term "product" used in this application covers a computer program that can be accessed from any computer-readable component, carrier, or medium. For example, the computer-readable medium may include but is not limited to: a magnetic storage component (for example, a hard disk, a floppy disk, or a magnetic tape), an optical disc (for example, a compact disc (compact disc, CD), or a digital versatile disc (digital versatile disc, DVD)), a smart card, and a flash memory component (for example, erasable programmable read-only memory (erasable programmable read-only memory, EPROM), a card, a stick, or a key drive). In addition, various storage media described in this specification may indicate one or more devices and/or other machine-readable media that are configured to store information. The term "machine-readable media" may include but is not limited to a radio channel, and various other media that can store, include, and/or carry instructions and/or data.

Alternatively, the technical solutions in this application are further applicable to a wireless local area network system, for example, an Internet of things (Internet of things, loT) network or a vehicle-to-everything (Vehicle to X, V2X) network. It is clear that embodiments of this application are further applicable to other possible communication systems, for example, a long term evolution (long term evolution, LTE) system, an LTE frequency division duplex (frequency division duplex, FDD) system, an LTE time division duplex (time division duplex, TDD) system, a universal mobile telecommunications system (universal mobile telecommunications system, UMTS), a worldwide interoperability for microwave access (worldwide interoperability for microwave access, WiMAX) communication system, a 5th generation (5th generation, 5G) communication system, and a future 6th generation (6th generation, 6G) communication system.

The foregoing communication systems to which this application is applicable are merely examples for description, and communication systems applicable to this application are not limited thereto. This is stated herein once for all, and is not repeated below.

In the WPAN, in a UWB technology, nanosecond-level non-sine wave narrow pulses are used to communicate data, and occupy a wide frequency spectrum range. Due to a narrow pulse and extremely low radiation spectrum density, the UWB technology has advantages of a strong multipath resolution capability, low power consumption, high confidentiality, and the like. Currently, the UWB technology has been written into the IEEE 802 series wireless standards, and the UWB technology-based WPAN standard IEEE 802.15.4a and its evolution version IEEE 802.15.4z have been released. Currently, formulation of the next-generation WPAN standard 802.15.4ab of the UWB technology has been put on the agenda.

In the UWB technology, data is communicated by transmitting and receiving extremely narrow pulses at a nanosecond or smaller level. Therefore, synchronization of a UWB signal on a receive device side is significant in the UWB technology. The synchronization of the UWB signal on the receive device side may be understood as that a PPDU on a transmit device side is transmitted in a form of a pulse signal, and the receive device determines, from a plurality of received pulse signals, a pulse signal from which a PPDU is to be received by the receive device. Currently, the synchronization of the UWB signal on the receive device side is mainly implemented via a synchronization header (synchronization header, SHR) in a physical layer protocol data unit (physical layer protocol data unit, PPDU). Specifically, the receive device may perform correlation detection on the synchronization header, to determine a start location of the to-be-received PPDU.

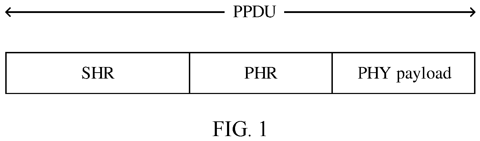

FIG. 1 is a diagram of a structure of a PPDU, in a UWB system, defined by a standard. As shown in FIG. 1, the PPDU includes an SHR, a physical header (physical header, PHR), and a physical layer (physical layer, PHY) payload field (payload field). The SHR is used by the receive device to perform PPDU detection and synchronization. Specifically, the receive device may detect, based on the SHR, whether the transmit device transmits the PPDU and a start location of the PPDU. The PHR carries physical layer indication information, for example, modulation and coding information, a length of the PPDU, and a receiver of the PPDU, to assist the receive device in correctly demodulating data. The physical layer payload field carries communicated data.

In this specification, a signal in the UWB system is referred to as a UWB signal. As described above, because the UWB signal is a nanosecond-level pulse signal, the UWB signal has a good multipath parsing capability to ensure centimeter-level ranging precision in a complex indoor multipath environment. However, one disadvantage of the UWB technology is that receiving and processing of the UWB signal are implemented at a high sampling rate (GHz), in other words, a clock of a UWB signal processing chip (for example, a UWB signal synchronization module of the chip) of the receive device needs to operate at a high frequency. Consequently, the UWB signal processing chip needs to have a large area, and power consumption and costs of the UWB signal processing chip are high. Time - frequency synchronization of the UWB signal is a key of a UWB signal receiving mechanism, and time-frequency synchronization precision of the UWB signal directly affects ranging performance. The UWB signal is a narrow pulse signal, and specifically, the pulse signal is at a nanosecond level in time domain. A UWB signal synchronization module needs to directly estimate time-frequency information of the UWB signal to implement time-frequency synchronization of the UWB signal. Consequently, a design of the UWB signal synchronization module is complex.

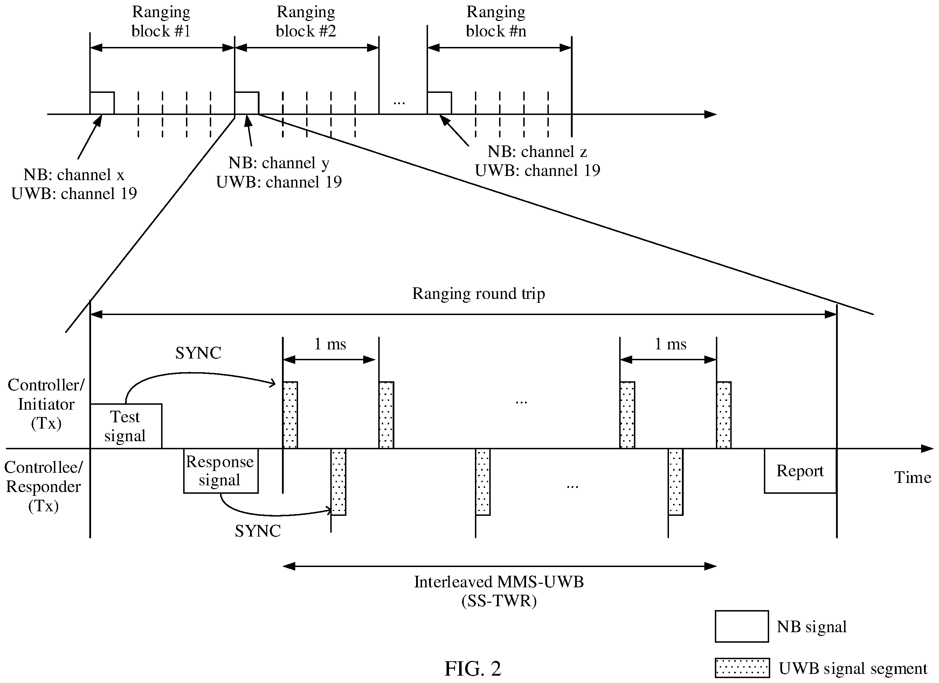

Based on the foregoing reasons, a method for ranging via a UWB signal under assistance of a narrowband signal is proposed, as shown in FIG. 2.

FIG. 2 is a diagram of a UWB ranging procedure under assistance of a narrowband protocol. An initiation station and a response station of a UWB signal use the UWB signal to calculate time of flight of the UWB signal, to implement high-precision ranging. In addition, ranging task negotiation and ranging result feedback are implemented according to a narrowband protocol. Specifically, the initiation station and the response station perform a narrowband-assisted UWB ranging for one time in each ranging block (ranging block). In each ranging block, a narrowband system operates on a same channel. In different ranging blocks, the narrowband system may change an operating channel through frequency hopping, to avoid a complex channel access solution. In a ranging procedure in each ranging block, the initiation station transmits a test signal to the response station, and the response station returns a response signal after receiving the test signal. As shown in FIG. 2, both the test signal and the response signal are narrowband signals. A narrowband signal processing module of the response station receives and processes the test signal, to obtain time-frequency synchronization information of the narrowband signal. Further, the narrowband signal processing module of the response station provides the time-frequency synchronization information of the narrowband signal for a UWB signal processing module of the response station, so that the UWB signal processing module processes a UWB signal after the narrowband signal. The UWB signal processing module directly uses the time-frequency synchronization information of the narrowband signal for receiving and processing of the UWB signal. In other words, the UWB signal processing module of the response station does not perform time-frequency synchronization, or the UWB signal processing module directly uses the time-frequency synchronization information of the narrowband signal as time-frequency synchronization information of the UWB signal for synchronization of the UWB signal. A narrowband signal processing module of the initiation station receives and processes the response signal for the test signal from the response station, to obtain the time-frequency synchronization information of the narrowband signal; and provides the time-frequency synchronization information for a UWB signal processing module of the initiation station. Similar to that of the response station, the UWB signal processing module of the initiation station does not perform time-frequency synchronization.

In the narrowband-assisted method for ranging via the UWB signal shown in FIG. 2, although a time-frequency synchronization mechanism of the narrowband signal is much simpler than the synchronization of the UWB signal in implementation, time-frequency synchronization precision of the narrowband signal is far from sufficient for synchronization precision of the UWB signal. When the UWB signal is used for ranging, ranging precision almost depends on time-frequency synchronization precision of the UWB signal. Specifically, if the time-frequency synchronization precision of the UWB signal is high, correspondingly, ranging precision is high. Conversely, if the time-frequency synchronization precision of the UWB signal is not high, it is difficult to ensure accurate correlation and accumulation and first path detection of channel impulse response (channel impulse response, CIR) during ranging.

In this case, this application provides a UWB signal synchronization method. Compared with a method in which a UWB signal processing module directly estimates time-frequency synchronization information of a UWB signal, this method can reduce design complexity of a UWB signal processing module, and can reduce power consumption, an area, and costs of a UWB signal processing chip. In addition, compared with the narrowband-assisted UWB ranging method shown in FIG. 2, the UWB signal synchronization method provided in this application can improve time-frequency synchronization precision of a UWB signal, and therefore can be applied to a high-precision ranging scenario of a UWB signal.

The following describes the technical solutions provided in this application.

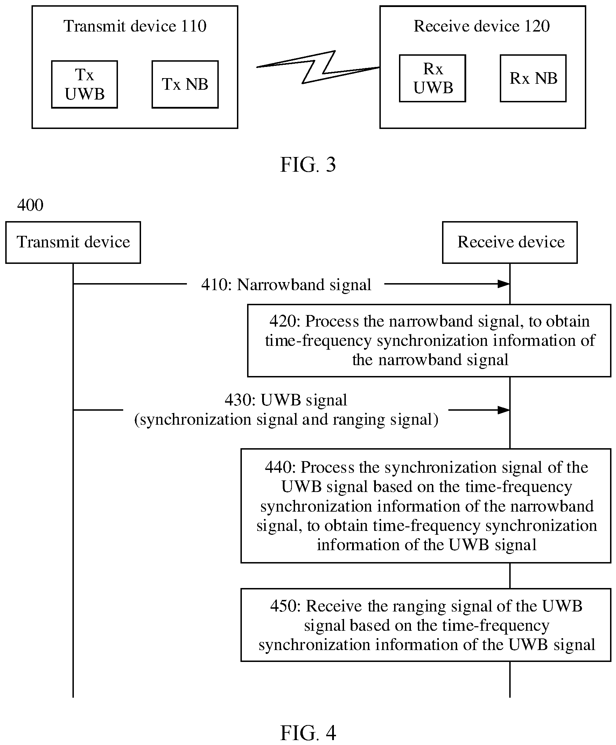

FIG. 3 is a diagram of an architecture of a communication system to which an embodiment of this application is applicable. As shown in FIG. 3, the communication system at least includes one transmit device and one receive device, which are respectively a transmit device 110 and a receive device 120 shown in FIG. 3. The transmit device 110 may communicate with the receive device 120 by using a UWB technology, or optionally, by using a narrowband technology. The transmit device 110 and the receive device 120 may each include a UWB signal processing module and an NB signal processing module. For example, the transmit device 110 includes a UWB signal transmit module and an NB signal transmit module, for example, a Tx UWB module and a Tx NB module in FIG. 3. The receive device 120 includes a UWB signal receive module and an NB signal receive module, for example, an Rx UWB module and an Rx NB module shown in FIG. 3. It should be understood that FIG. 3 is described only by using an example in which the communication system includes one transmit device and one receive device. The communication system is not limited to including more other devices. For example, the communication system may further include more receive devices.

In embodiments of this application, the transmit device is a device that transmits a UWB signal, and the receive device is a device that receives the UWB signal.

Optionally, the transmit device and the receive device may be used in a plurality of possible application scenarios. For example, the transmit device mentioned in the following embodiments may be an initiation station during UWB ranging, and the receive device is a response station; or the transmit device is a response station, and the receive device is an initiation station. Optionally, the transmit device may also be a positioning device in a UWB positioning scenario, and the second device is a mobile tag; or the transmit device is a mobile tag, and the receive device is a positioning device. In other words, the UWB signal synchronization method provided in this application is not only applicable to a scenario in which the initiation station (or the positioning device) transmits a UWB signal to the response station (or the mobile tag) and the response station (or the mobile tag) performs UWB signal synchronization, but also applicable to a scenario in which the response station (or the mobile tag) transmits a UWB signal to the initiation station (or the positioning device) and the initiation station (or the positioning device) performs UWB signal synchronization. This is not limited.

In addition, the UWB signal synchronization method provided in this application is further applicable to any scenario in which UWB signal synchronization may need to be performed. This is not limited.

The following embodiments is described by using an example in which the UWB signal synchronization method provided in this application is applied to a UWB ranging scenario.

FIG. 4 is a schematic flowchart of a UWB signal synchronization method according to this application. Optionally, the method procedure in FIG. 4 may be performed by a transmit device/receive device, or may be performed by a module and/or a component (for example, a chip or an integrated circuit) that are/is installed in the transmit device/receive device and that have/has a corresponding function. This is not limited. The following embodiments use a transmit device/receive device as an example for description.

410: The transmit device transmits a narrowband signal.

The receive device receives the narrowband signal.

For example, the transmit device may be the transmit device 110 shown in FIG. 3, and the receive device may be the receive device 120 shown in FIG. 3. Specifically, the transmit device may transmit the narrowband signal by using a Tx NB module, and correspondingly, the receive device may receive the narrowband signal by using an Rx NB module.

420: The receive device processes the narrowband signal, to obtain time-frequency synchronization information of the narrowband signal.

The receive device receives and processes the narrowband signal, to obtain the time-frequency synchronization information of the narrowband signal. In other words, the receive device implements time-frequency synchronization of the narrowband signal.

For example, the receive device may process the narrowband signal by using a narrowband signal processing module, to obtain the time-frequency synchronization information of the narrowband signal. Further, the narrowband signal processing module of the receive device provides the obtained time-frequency synchronization information of the narrowband signal for a UWB signal processing module of the receive device.

In the technical solutions of this application, the receive device receives and processes the narrowband signal from the transmit device, to implement time-frequency synchronization of the narrowband signal. It may be considered that the narrowband signal provides rough time-frequency synchronization information for the receive device. The receive device estimates time-frequency synchronization information of a UWB signal from the transmit device based on the rough time-frequency synchronization information.

430: The transmit device transmits the UWB signal. The UWB signal includes a synchronization signal and a ranging signal.

For example, the transmit device may transmit the UWB signal by using a Tx UWB module.

440: The receive device processes the synchronization signal of the UWB signal based on the time-frequency synchronization information of the narrowband signal, to obtain the time-frequency synchronization information of the UWB signal.

In step 440, the receive device processes the synchronization signal of the UWB signal based on the time-frequency synchronization information of the narrowband signal, to obtain the time-frequency synchronization information of the UWB signal. In other words, the receive device processes the synchronization signal of the UWB signal based on the rough time-frequency synchronization information provided by the narrowband signal, to obtain more precise time-frequency synchronization information.

Specifically, as shown in step 420, the narrowband signal processing module of the receive device provides the obtained time-frequency synchronization information of the narrowband signal for the UWB signal processing module of the receive device. On this basis, the UWB signal processing module of the receive device processes the synchronization signal from the transmit device based on the time-frequency synchronization information, provided by the narrowband signal processing module, of the narrowband signal, to obtain the more precise time-frequency synchronization information.

It can be learned that this application provides a "two-step UWB signal time-frequency synchronization" solution:

Step 1: The transmit device transmits the narrowband signal, so that the receive device obtains the rough initial time-frequency synchronization information. It is clear that the rough initial time-frequency synchronization information is relative to the time-frequency synchronization of the UWB signal. Actually, the receive device has achieved time-frequency synchronization of the narrowband signal by processing the narrowband signal. However, time-frequency synchronization precision is low for reception of the UWB signal. Consequently, the initial time-frequency synchronization information is considered as the rough time-frequency synchronization information.

Step 2: The transmit device transmits the UWB signal after transmitting the narrowband signal, where the UWB signal includes the synchronization signal and the ranging signal. The synchronization signal is used by the receive device to achieve more precise time-frequency synchronization of the UWB signal, to process the subsequent ranging signal. The time-frequency synchronization information obtained by processing the synchronization signal by the receive device is more precise time-frequency synchronization information of the UWB signal relative to the rough time-frequency synchronization information provided by the narrowband signal.

450: The receive device receives the ranging signal of the UWB signal based on the time-frequency synchronization information of the UWB signal.

It should be noted that, in the narrowband-assisted procedure for ranging via a UWB signal in FIG. 2, the initiation station transmits a narrowband signal, and the response station receives and processes the narrowband signal, to obtain time-frequency synchronization information of the narrowband signal. Then, the initiation station transmits a ranging signal, and the response station receives the ranging signal based on the time-frequency synchronization information of the narrowband signal. In other words, after achieving time-frequency synchronization of the narrowband signal, the response station does not perform further time-frequency synchronization, but receives the ranging signal of the UWB signal. However, precision of the time-frequency synchronization of the narrowband signal is not enough for reception of the UWB signal. In this application, after achieving time-frequency synchronization of the narrowband signal, the response station (for example, the receive device) processes (for example, by using the UWB signal processing module) the synchronization signal of the UWB signal, to obtain the more precise time-frequency synchronization information. The ranging signal of the UWB signal is processed based on the more precise time-frequency synchronization information, to improve ranging precision.

In addition, in comparison with the technical solution in which the receive device directly estimates the time-frequency synchronization information of the UWB signal, in the technical solution provided in this application, because the narrowband signal provides the rough time-frequency synchronization information, the receive device further estimates the time-frequency synchronization information of the UWB signal based on the rough time-frequency synchronization information, to greatly reduce complexity. In addition, power consumption and an area of the UWB signal processing module of the receive device are reduced.

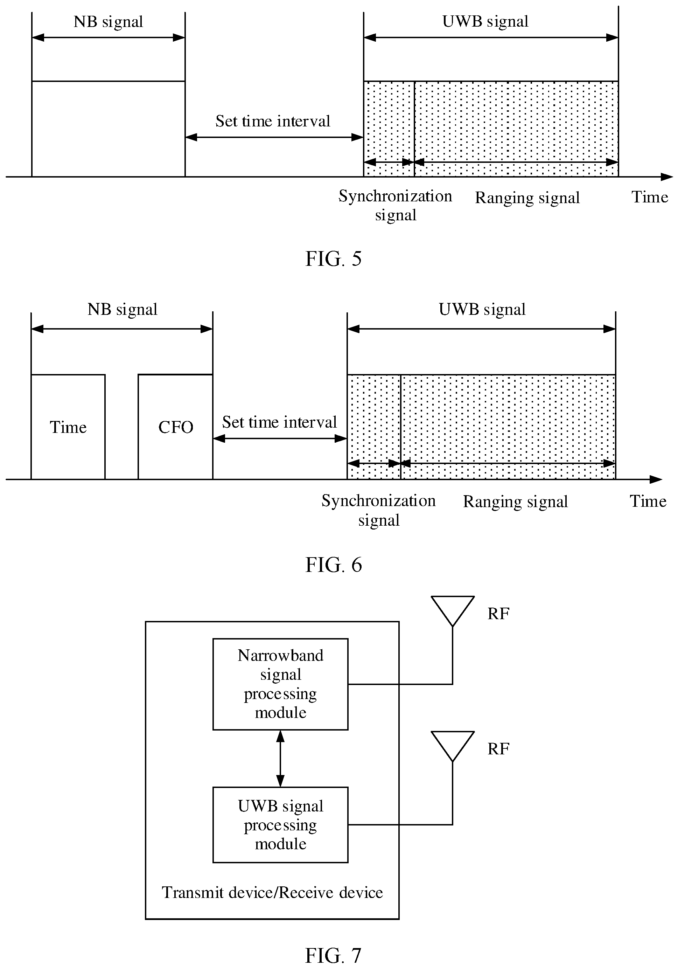

FIG. 5 is a diagram of a UWB signal synchronization method according to this application. As shown in FIG. 5, a transmit device transmits an NB signal. After a set time interval, the transmit device transmits a UWB signal. The UWB signal includes a synchronization signal and a ranging signal. At a receive device side, a receive device receives and processes the NB signal, to obtain rough time-frequency synchronization information. After the set time interval, the receive device receives and processes the synchronization signal of the UWB signal based on the rough time-frequency synchronization information, to obtain more precise time-frequency synchronization information; and receives and processes the ranging signal after the synchronization signal based on the more precise time-frequency synchronization information.

Optionally, the time-frequency synchronization information of the narrowband signal may include time synchronization information and carrier frequency offset (carrier frequency offset, CFO) synchronization information.

Optionally, the time interval between the narrowband signal and the UWB signal may be negotiated in advance by the transmit device and the receive device, or may be preconfigured or preset. For example, the time interval may be negotiated based on the narrowband signal.

Optionally, a specific form of the narrowband signal is not limited in this specification. For example, a frequency point, a bandwidth, a frame format, a modulation scheme, and the like of the narrowband signal are not limited. For example, the narrowband signal may be a Zigbee signal or a Bluetooth signal whose frequency point is in a 2.4 GHz ISM frequency band, uses a bandwidth of 1 MHz or 2 MHz, and uses an offset quadrature phase-shift keying (offset quadrature phase-shift keying, O-QPSK) modulation scheme.

In addition, optionally, the narrowband signal is not limited to including one or more narrowband frames. When the narrowband signal includes a plurality of narrowband frames, the receive device obtains the time synchronization information of the narrowband signal based on a part of the plurality of narrowband frames, and obtains the CFO synchronization information of the narrowband signal based on other narrowband frames in the plurality of narrowband frames. As shown in FIG. 6, FIG. 6 is another diagram of a UWB signal synchronization method according to this application.

For example, an internal structure of a receive device may be shown in FIG. 7. FIG. 7 is a diagram of an internal structure of a transmit device/receive device. As shown in FIG. 7, the receive device is used as an example. The receive device may include a narrowband signal processing module and a UWB signal processing module. The narrowband signal processing module may process a narrowband signal received from the transmit device by using a radio frequency module, and the UWB signal processing module may process a UWB signal received from the transmit device by using the radio frequency module. In addition, the narrowband signal processing module and the UWB signal processing module may exchange data and/or information. For example, the narrowband signal processing module transmits, to the UWB signal processing module, rough time-frequency synchronization information obtained by processing the narrowband signal received from the transmit device. This is similar to the transmit device. Details are not described again.

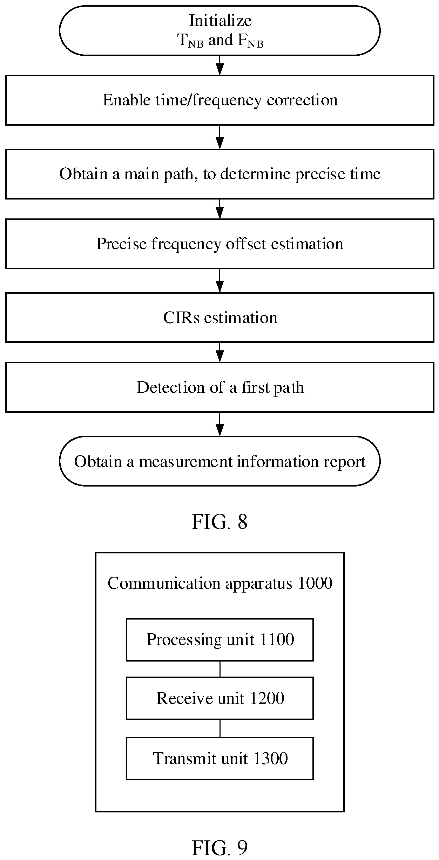

FIG. 8 is a diagram of an operating procedure of a UWB signal processing module of a receive device. As shown in FIG. 8, the operating procedure of the UWB signal processing module may be as follows:
(1) initializing time synchronization information T_{NB} and frequency synchronization information F_{NB} of a narrowband signal, where
   initialized T_{NB} and the initialized frequency synchronization information F_{NB} are respectively rough time synchronization information and frequency synchronization information transmitted by a narrowband signal processing module;
(2) enabling time and frequency correction;
(3) obtaining a main path, to determine more precise time;
(4) performing frequency offset estimation based on the main path, to obtain a more precise frequency;
(5) performing CIR estimation;
(6) detection of a first path, where
   it should be understood that a UWB signal is propagated by a transmit device to a receive device, where a propagation path of a direct wave is referred to as a direct path, and another propagation path is referred to as a reflection path; and because the direct path has a shortest propagation distance and a fastest propagation speed, roundtrip time, which is also referred to as time of flight, of the UWB signal communicated between the transmit device and the receive device may be determined by detecting time of arrival of a signal on the first path; and
(7) obtaining a measurement information report.

Specifically, the measurement information report mainly includes the time of flight.

After obtaining the time of flight, the transmit device calculates a distance between the transmit device and the receive device based on the time of flight and a propagation speed of an electromagnetic wave, to complete ranging.

The foregoing describes in detail the UWB signal synchronization method provided in this application.

It can be learned that in this application, the two-step UWB signal time-frequency synchronization solution under assistance of a narrowband signal is used, to reduce implementation complexity of the UWB signal processing module. In addition, narrowband signal synchronization and UWB signal synchronization are combined, to ensure high time-frequency synchronization precision of the UWB signal. This ensures high ranging precision. In the technical solutions of this application, design complexity, an area, and power consumption of a UWB signal processing chip of the receive device can be reduced without affecting UWB signal ranging performance (or precision).

The following describes a communication apparatus provided in this application.

FIG. 9 is a block diagram of a communication apparatus according to this application. As shown in FIG. 9, a communication apparatus 1000 includes a processing unit 1100, a receive unit 1200, and a transmit unit 1300.

Optionally, the communication apparatus 1000 may correspond to a receive device in embodiments of this application.

In this case, the units of the communication apparatus 1000 are configured to implement the following functions:

The processing unit 1100 is configured to:
process a narrowband signal, to obtain time-frequency synchronization information of the narrowband signal; and
process a synchronization signal of an ultra-wideband UWB signal based on the time-frequency synchronization information of the narrowband signal, to obtain time-frequency synchronization information of the UWB signal, where the UWB signal includes the synchronization signal and a ranging signal.

The receive unit 1200 is configured to receive the ranging signal based on the time-frequency synchronization information of the UWB signal.

Optionally, in an embodiment, the receive unit 1200 is configured to receive the synchronization signal of the UWB signal based on the time-frequency synchronization information of the narrowband signal. There is a set time interval between the narrowband signal and the synchronization signal of the UWB signal in time domain.

The processing unit 1100 is configured to detect the synchronization signal of the UWB signal, to obtain the time-frequency synchronization information of the UWB signal.

Optionally, in an embodiment, the processing unit 1100 is configured to:
detect the synchronization signal of the UWB signal, and determine a main propagation path of the synchronization signal between a transmit device and a receive device, to obtain time domain synchronization information of the UWB signal; and
perform frequency offset estimation based on the main propagation path, to obtain frequency domain synchronization information of the UWB signal.

Optionally, in an embodiment, the processing unit 1100 is further configured to:
perform channel impulse response CIR estimation based on the ranging signal, to obtain an estimation result;
determine a first propagation path of the UWB signal between the transmit device and the receive device based on the estimation result; and
perform ranging calculation based on the first propagation path.

In embodiments in which the communication apparatus 1000 corresponds to the receive device, the processing unit 1100 is configured to perform processing and/or an operation, other than transmitting and receiving actions, implemented inside the receive device, the receive unit 1200 is configured to perform the receiving action performed by the receive device, and the transmit unit 1300 is configured to perform the transmitting action performed by the receive device.

For example, in FIG. 4, the receive unit 1200 is configured to perform the receiving action in step 410 and step 430, and the processing unit 1300 is configured to perform step 420, step 440, or step 450.

Optionally, the communication apparatus 1000 may correspond to a transmit device in embodiments of this application.

In this case, the units of the communication apparatus 1000 are configured to implement the following functions:

The processing unit 1100 is configured to generate a narrowband signal and a UWB signal.

The transmit unit 1300 is configured to:
transmit the narrowband signal, where the narrowband signal is used by a receive device to obtain time-frequency synchronization information of the narrowband signal; and
transmit the UWB signal, where the UWB signal includes a synchronization signal and a ranging signal, and the synchronization signal and the time-frequency synchronization information of the narrowband signal are used by the receive device to obtain time-frequency synchronization information of the UWB signal.

Optionally, in an embodiment, there is a set time interval between the narrowband signal and the synchronization signal of the UWB signal in time domain.

In embodiments in which the communication apparatus 1000 corresponds to the transmit device, the processing unit 1100 is configured to perform processing and/or an operation, other than transmitting and receiving actions, implemented inside the transmit device, the receive unit 1200 is configured to perform a receiving action performed by the transmit device, and the transmit unit 1300 is configured to perform a transmitting action performed by the transmit device.

For example, in FIG. 4, the transmit unit 1300 is configured to perform the transmitting action in step 410 and step 430.

In the foregoing implementations, the receive unit 1200 and the transmit unit 1300 may also be integrated into one transceiver unit, and have both of a receiving function and a transmitting function. This is not limited herein.

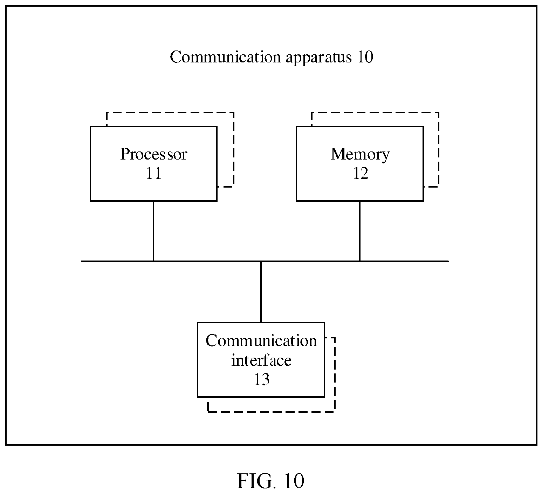

FIG. 10 is a diagram of a structure of a communication apparatus according to this application. As shown in FIG. 10, a communication apparatus 10 includes one or more processors 11, one or more memories 12, and one or more communication interfaces 13. The processor 11 is configured to control the communication interface 13 to receive and transmit a signal, the memory 12 is configured to store a computer program, and the processor 11 is configured to: invoke the computer program from the memory 12, and run the computer program, so that the communication apparatus 10 performs processing performed by the receive device or the transmit device in the method embodiments of this application.

For example, the processor 11 may have a function of the processing unit 1100 shown in FIG. 9, and the communication interface 13 may have a function of the receive unit 1200 and/or a function of the transmit unit 1300 shown in FIG. 9. Specifically, the processor 11 may be configured to perform processing or an operation performed inside the communication apparatus, and the communication interface 13 is configured to perform a transmitting operation and/or a receiving operation performed by the communication apparatus.

Optionally, in an implementation, the communication apparatus 10 may be the receive device in the method embodiments. In this implementation, the communication interface 13 may be a transceiver of the receive device. The transceiver may include a receiver and/or a transmitter. Optionally, the processor 11 may be a baseband apparatus of the receive device, and the communication interface 13 may be a radio frequency apparatus.

In another implementation, the communication apparatus 10 may be a chip (or a chip system) installed in the receive device. In this implementation, the communication interface 13 may be an interface circuit or an input/output interface.

Optionally, in an implementation, the communication apparatus 10 may be the transmit device in the method embodiments. In this implementation, the communication interface 13 may be a transceiver of the transmit device. The transceiver may include a receiver and/or a transmitter. Optionally, the processor 11 may be a baseband apparatus of the transmit device, and the communication interface 13 may be a radio frequency apparatus.

In another implementation, the communication apparatus 10 may be a chip (or a chip system) installed in the transmit device. In this implementation, the communication interface 13 may be an interface circuit or an input/output interface.

In FIG. 10, a dashed box behind a component (for example, the processor, the memory, or the communication interface) indicates that there may be more than one component.

In addition, this application further provides a computer-readable storage medium. The computer-readable storage medium stores computer instructions, and when the computer instructions are run on a computer, an operation and/or processing performed by the receive device in the method embodiments of this application are/is performed.

This application further provides a computer-readable storage medium. The computer-readable storage medium stores computer instructions, and when the computer instructions are run on a computer, an operation and/or processing performed by the transmit device in the method embodiments of this application are/is performed.

This application further provides a computer program product. The computer program product includes computer program code or instructions. When the computer program code or the instructions are run on a computer, an operation and/or processing performed by the receive device in the method embodiments of this application are/is performed.

This application further provides a computer program product. The computer program product includes computer program code or instructions. When the computer program code or the instructions are run on a computer, an operation and/or processing performed by the transmit device in the method embodiments of this application are/is performed.

This application further provides a chip. The chip includes a processor. A memory configured to store a computer program is disposed independent of the chip. The processor is configured to execute the computer program stored in the memory, so that a communication apparatus in which the chip is installed performs the operation and/or processing performed by the receive device in any method embodiment.

This application further provides a chip. The chip includes a processor. A memory configured to store a computer program is disposed independent of the chip. The processor is configured to execute the computer program stored in the memory, so that a communication apparatus in which the chip is installed performs the operation and/or processing performed by the transmit device in any method embodiment.

Further, the chip may include a communication interface. The communication interface may be an input/output interface, an interface circuit, or the like. Further, the chip may include the memory.

Optionally, there may be one or more processors, there may be one or more memories, and there may be one or more memories.

This application further provides a communication apparatus (for example, may be a chip or a chip system), including a processor and a communication interface. The communication interface is configured to receive (or referred to as input) data and/or information, and communicate the received data and/or information to the processor. The processor processes the data and/or information. The communication interface is further configured to output (or referred to as output) data and/or information processed by the processor, so that an operation and/or processing performed by the receive device in any method embodiment are/is performed.

This application further provides a communication apparatus (for example, may be a chip or a chip system), including a processor and a communication interface. The communication interface is configured to receive (or referred to as input) data and/or information, and communicate the received data and/or information to the processor. The processor processes the data and/or information. The communication interface is further configured to output (or referred to as output) data and/or information processed by the processor, so that an operation and/or processing performed by the transmit device in any method embodiment are/is performed.

This application further provides a communication apparatus, including at least one processor. The at least one processor is coupled to at least one memory. The at least one processor is configured to execute a computer program or instructions stored in the at least one memory, so that the communication apparatus performs an operation and/or processing performed by the receive device in any method embodiment.

This application further provides a communication apparatus, including at least one processor. The at least one processor is coupled to at least one memory. The at least one processor is configured to execute a computer program or instructions stored in the at least one memory, so that the communication apparatus performs an operation and/or processing performed by the transmit device in any method embodiment.

This application further provides a wireless communication system, including the receive device in the method embodiments of this application. Optionally, the wireless communication system may further include the transmit device in the method embodiments.

A processor in embodiments of this application may be an integrated circuit chip, and has a signal processing capability. In an implementation process, steps in the method embodiments can be completed by using a hardware-integrated logic circuit in the processor, or by using instructions in a form of software. The processor may be a general-purpose processor, a digital signal processor (digital signal processor, DSP), an application-specific integrated circuit (application-specific integrated circuit, ASIC), a field programmable gate array (field programmable gate array, FPGA) or another programmable logic device, a discrete gate or transistor logic device, or a discrete hardware component. The general-purpose processor may be a microprocessor, or the processor may be any conventional processor or the like. The steps of the methods disclosed in embodiments of this application may be directly presented as being performed and completed by a hardware encoding processor, or performed and completed by a combination of hardware and a software module in an encoding processor. The software module may be located in a mature storage medium in the art, for example, a random access memory, a flash memory, a read-only memory, a programmable read-only memory, an electrically erasable programmable memory, or a register. The storage medium is located in the memory, and the processor reads information in the memory and completes the steps in the foregoing methods in combination with hardware of the processor.

The memory in embodiments of this application may be a volatile memory or a nonvolatile memory, or may include both a volatile memory and a nonvolatile memory. The nonvolatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), and is used as an external cache. By way of example rather than limitative description, RAMs in many forms are available, for example, a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DRRAM). It should be noted that the memory of the systems and methods described in this specification includes but is not limited to these and any memory of another proper type.

All or some of the methods provided in the foregoing embodiments may be implemented by software, hardware, firmware, or any combination thereof. When software is used to implement embodiments, all or some of the methods may be implemented in a form of a computer program product. The computer program product may include one or more computer instructions. When the computer program instructions are loaded and executed on a computer, the procedure or functions according to embodiments of this application are all or partially generated. The computer may be a general-purpose computer, a dedicated computer, a computer network, or another programmable apparatus. The computer instructions may be stored in a computer-readable storage medium or may be communicated from one computer-readable storage medium to another computer-readable storage medium. For example, the computer instructions may be communicated from one website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be any usable medium accessible by the computer, or a data storage device, for example, a server or a data center, integrating one or more usable media.

A person of ordinary skill in the art may be aware that, with reference to the examples described in embodiments disclosed in this specification, units and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

A person skilled in the art may clearly understand that, for the purpose of convenient and brief description, for a detailed operating process of the foregoing system, apparatus, and unit, refer to a corresponding process in the method embodiments. Details are not described herein again.

In the several embodiments provided in this application, it should be understood that the disclosed system, apparatus, and method may be implemented in another manner. For example, the described apparatus embodiments are merely examples. For example, division into units is merely division into logical functions and may be other division during actual implementation. For example, a plurality of units or components may be combined or integrated into another system, or some features may be ignored or not performed. In addition, the displayed or discussed mutual coupling or direct coupling or communication connection may be implemented through some interfaces. The indirect coupling or communication connection between the apparatuses or units may be implemented in an electronic form, a mechanical form, or another form.

Units described as separate parts may or may not be physically separate, and parts displayed as units may or may not be physical units, may be located in one position, or may be distributed on a plurality of network units. Some or all of the units may be selected based on actual requirements to achieve objectives of the solutions of the embodiments.

In addition, functional units in embodiments of this application may be integrated into one processing unit, or each of the units may exist alone physically, or two or more units may be integrated into one unit.

When the functions are implemented in a form of a software functional unit and sold or used as an independent product, the functions may be stored in a computer-readable storage medium. Based on such an understanding, the technical solutions of this application essentially, or the part contributing to the conventional technology, or some of the technical solutions may be implemented in a form of a software product. The software product is stored in a storage medium, and includes several instructions for instructing a computer device (which may be a personal computer, a server, or a network device) to perform all or some of the steps of the methods described in embodiments of this application. The foregoing storage medium includes any medium that can store program code, for example, a USB flash drive, a removable hard disk, a read-only memory (Read-Only Memory, ROM), a random access memory (Random Access Memory, RAM), a magnetic disk, or an optical disc.

The foregoing descriptions are merely specific implementations of this application, but the protection scope of this application is not limited thereto. Any variation or replacement that can be readily figured out by a person skilled in the art within the technical scope disclosed in this application shall fall within the protection scope of this application. Therefore, the protection scope of this application shall be subject to the protection scope of the claims.

## Claims

1. An ultra-wideband signal synchronization method, comprising:
processing a narrowband signal, to obtain time-frequency synchronization information of the narrowband signal;
processing a synchronization signal of an ultra-wideband UWB signal based on the time-frequency synchronization information of the narrowband signal, to obtain time-frequency synchronization information of the UWB signal, wherein the UWB signal comprises the synchronization signal and a ranging signal; and
receiving the ranging signal based on the time-frequency synchronization information of the UWB signal.

2. The method according to claim 1, wherein the processing a synchronization signal of a UWB signal based on the time-frequency synchronization information of the narrowband signal, to obtain time-frequency synchronization information of the UWB signal comprises:
receiving the synchronization signal of the UWB signal based on the time-frequency synchronization information of the narrowband signal, wherein there is a set time interval between the narrowband signal and the synchronization signal of the UWB signal in time domain; and
detecting the synchronization signal of the UWB signal, to obtain the time-frequency synchronization information of the UWB signal.

3. The method according to claim 2, wherein the detecting the synchronization signal of the UWB signal, to obtain the time-frequency synchronization information of the UWB signal comprises:
detecting the synchronization signal of the UWB signal, and determining a main propagation path of the synchronization signal between a transmit device and a receive device, to obtain time domain synchronization information of the UWB signal; and
performing frequency offset estimation based on the main propagation path, to obtain frequency domain synchronization information of the UWB signal.

4. The method according to any one of claims 1 to 3, wherein the method further comprises:
performing channel impulse response CIR estimation based on the ranging signal, to obtain an estimation result;
determining a first propagation path of the UWB signal between the transmit device and the receive device based on the estimation result; and
performing ranging calculation based on the first propagation path.

5. An ultra-wideband signal synchronization method, comprising:
transmitting a narrowband signal, wherein the narrowband signal is used by a receive device to obtain time-frequency synchronization information of the narrowband signal; and
transmitting a UWB signal, wherein the UWB signal comprises a synchronization signal and a ranging signal, and the synchronization signal and the time-frequency synchronization information of the narrowband signal are used by the receive device to obtain time-frequency synchronization information of the UWB signal.

6. The method according to claim 5, wherein there is a set time interval between the narrowband signal and the synchronization signal of the UWB signal in time domain.

7. A communication apparatus, comprising:
a processing unit, configured to process a narrowband signal, to obtain time-frequency synchronization information of the narrowband signal, and
process a synchronization signal of an ultra-wideband UWB signal based on the time-frequency synchronization information of the narrowband signal, to obtain time-frequency synchronization information of the UWB signal, wherein the UWB signal comprises the synchronization signal and a ranging signal; and
a receive unit, configured to receive the ranging signal based on the time-frequency synchronization information of the UWB signal.

8. The communication apparatus according to claim 7, wherein the processing unit is configured to:
receive the synchronization signal of the UWB signal based on the time-frequency synchronization information of the narrowband signal, wherein there is a set time interval between the narrowband signal and the synchronization signal of the UWB signal in time domain; and
detect the synchronization signal of the UWB signal, to obtain the time-frequency synchronization information of the UWB signal.

9. The communication apparatus according to claim 8, wherein the processing unit is configured to:
detect the synchronization signal of the UWB signal, and determine a main propagation path of the synchronization signal between a transmit device and the communication apparatus, to obtain time domain synchronization information of the UWB signal; and
perform frequency offset estimation based on the main propagation path, to obtain frequency domain synchronization information of the UWB signal.

10. The communication apparatus according to any one of claims 7 to 9, wherein the processing unit is configured to:
perform channel impulse response CIR estimation based on the ranging signal, to obtain an estimation result;
determine a first propagation path of the UWB signal between the transmit device and the communication apparatus based on the estimation result; and
perform ranging calculation based on the first propagation path.

11. A communication apparatus, comprising:
a transmit unit, configured to:
transmit a narrowband signal, wherein the narrowband signal is used by a receive device to obtain time-frequency synchronization information of the narrowband signal; and
transmit a UWB signal, wherein the UWB signal comprises a synchronization signal and a ranging signal, and the synchronization signal and the time-frequency synchronization information of the narrowband signal are used by the receive device to obtain time-frequency synchronization information of the UWB signal.

12. The communication apparatus according to any one of claims 7 to 9, wherein there is a set time interval between the narrowband signal and the synchronization signal of the UWB signal in time domain.

13. A communication apparatus, comprising at least one processor, wherein the at least one processor is coupled to at least one memory, and the at least one processor is configured to execute a computer program or instructions stored in the at least one memory, so that the communication apparatus performs the method according to any one of claims 1 to 4.

14. A communication apparatus, comprising at least one processor, wherein the at least one processor is coupled to at least one memory, and the at least one processor is configured to execute a computer program or instructions stored in the at least one memory, so that the communication apparatus performs the method according to claim 5 or 6.

15. A chip, comprising a processor and a communication interface, wherein the communication interface is configured to receive data and/or information, and communicate the received data and/or information to the processor, and the processor processes the data and/or the information, to perform the method according to any one of claims 1 to 4 or the method according to claim 5 or 6.

16. A computer-readable storage medium, wherein the computer-readable storage medium stores computer instructions, and when the computer instructions are run on a computer, the method according to any one of claims 1 to 4 or the method according to claim 5 or 6 is implemented.

17. A computer program product, wherein the computer program product comprises computer program code, and when the computer program code is run on a computer, the method according to any one of claims 1 to 4 or the method according to claim 5 or 6 is implemented.

18. A wireless communication system, comprising the communication apparatus according to claim 13 and the communication apparatus according to claim 14.
